# EUROPEAN PATENT APPLICATION

(11) **EP 4 099 533 A1**
(43) Date of publication of application: **07.12.2022**
(21) Application number: 21177792.5
(22) Date of filing: 04.06.2021
(51) Int. Cl.: H02J 3/38, H02J 3/46

(54) **POWER MANAGEMENT ARRANGEMENT, POWER MANAGEMENT SYSTEM AND METHOD FOR MANAGING POWER**

(71) Applicant: E.On Group Innovation GmbH, 45131 Essen (DE)
(72) Inventor: Hernandez Salmeron, Luis, Arturo, 40237 Düsseldorf (DE); Berazaluce Minondo, Inigo, 45470 Mülheim an der Ruhr (DE); Davies, Rob, London, SW15 1AH (GB); Rosvall, Jörgen, 235 35 Vellinge (SE); Rumney, Denver, Galashiels, TD1 2BL (GB); Fischer, Thomas, 45149 Essen (DE)
(74) Representative: Bals & Vogel Patentanwälte PartGmbB

(57) **Abstract**

The invention relates to a power management arrangement (60), in particular for a household (30), comprising a first connection interface (61) connected to or configured for being connected to a current transmitter clamp (10), a second connection interface (62) connected to or configured for being connected to a power meter (21) and/or an inverter (20) of a power system (22), a third connection interface (63) connected to or configured for being connected to a grid station (40) and/or a grid management server (50), and a power control arrangement (64), the power control arrangement (64) being configured for receiving power limitation information (45, 52) from the grid station (40) and/or the grid management server (50) via the third connection interface (63), and controlling the power meter (21) and/or the inverter (20) based on the received power limitation information (45, 52).

## Description

The invention relates to a power management arrangement, a power management system and a method for managing power.

Residential photovoltaic inverters of households optimize the energy generation of the photovoltaic panels given the current irradiation, typically by looking for the optimum voltage. Photovoltaic inverters can usually receive an external command to determine at every moment what the maximum power is that they may produce.

Certain sites have network restrictions which force the electric distribution company to impose a limit on the power export from households. These limitations can be based on a threshold to be preserved at the grid connection point or by the distribution network operator actively disconnecting loads when needed. In other cases, photovoltaic systems are not allowed to export any energy at all to the grid, and mechanisms are implemented to ensure that there is no export of energy into the grid connection point at which the household is connected to the grid.

These power export limitations are usually implemented by connecting a current transmitter clamp to the inverter, so that the current at the grid connection point is measured by the current transmitter clamp and the inverter then ensures that there is no current export or power export as the inverter reads the grid voltage internally and can therefore convert the current measurement of the current transmitter clamp into a power measurement. Other inverters can directly read a power meter. The power meter will have the voltage measurement and the current transmitter clamp to read current at the grid connection point.

The power or grid export limitation at the connection point can be dynamic if the distribution system implements an intelligent system, typically known as an Active Network Management (ANM), which reads a number of parameters of the specific network and then calculates the export limits in a dynamic way depending on these parameters. However, such an intelligent system requires an interface between the ANM of the electric distribution company and the photovoltaic inverter. Usually, communication ports at the household having the photovoltaic inverter are available but these may not be accessible for the electric distribution company. This poses a significant challenge on how the electric distribution company can communicate the power or grid export limitation to the photovoltaic inverter to adopt the limitation rather than to use a fixed value of limitation.

Accordingly, it is an object of the invention to provide a simple, widely usable and cost-efficient power management in households capable of considering current grid limitations.

This object is solved by the subject-matter of the claims. In particular, the object is solved by a power management arrangement according to claim 1, a power management system according to claim 10 and a method for managing power according to claim 15. Further details of the invention unfold from the other claims as well as the description and the drawings. Thereby, the features and details described in connection with the power management arrangement of the invention apply in connection with the power management system of the invention and the method of the invention, so that regarding the disclosure of the individual aspects of the invention it is or can be referred to one another.

According to a first aspect of the invention, the object is solved by a power management arrangement, in particular for a household. The power management arrangement comprises a first connection interface connected to or configured for being connected to a current transmitter clamp. The power management arrangement further comprises a second connection interface connected to or configured for being connected to a power meter and/or an inverter. The power management arrangement moreover comprises a third connection interface connected to or configured for being connected to a grid station and/or a grid management server. Also, the power management arrangement comprises a power control arrangement. The power control arrangement is configured for receiving power limitation information from the grid station and/or the grid management server via the third connection interface, and controlling the power meter and/or the inverter based at least on the received power limitation information.

Accordingly, one particular relevant, however not limiting, application of the power management arrangement are households or houses. Households or houses typically draw or, in other words, import power from the grid connected to the grid station, which may also be referred to as a so-called substation, connecting several or multiple households or houses to the (electrical) grid or, in other words, (electric) network. However, with new power systems, in particular power generating or export systems, i.e., having the capability of generating and exporting power into the grid, in the households, households can also export power into the grid.

The power management arrangement of the invention allows a simple, widely usable and cost-efficient power management for the households considering that the grid may not be able to accept any power export, in particular depending on the current time and situation, but restrictions or limitations in terms of power export into the grid are required. The power management arrangement is particularly well suitable for the management of the power export from power systems, in particular of households, into the grid, but may equivalently be used for managing the power import from the grid to consumers, in particular of the households, because the power limitation typically is affected by the overall import and export of power from and to the grid.

In a first possible embodiment of the power management arrangement, the power management arrangement comprises a power meter having the first connection interface and the second connection interface. Further, the power control arrangement may comprise a relay or switch of the power meter connected to the second connection interface. The power meter may in particular be a smart meter. This power management arrangement is particularly cost-efficient because it facilitates already existing smart meters and relays inside of them for controlling the power meter and/or the inverter, which in particular may be from a household or house. The relay may be provided inside of the power meter. The relay may be configured so as to switch between positions based on a signal received from the current transmitter clamp and a signal received from another source such that a certain value of an export limitation may be triggered on and off. The positions may be associated with controlling the power meter and/or inverter of the power system according to export limitations or not, or, in other words, to impose export limitations on the power system or not.

In this first embodiment of the power management arrangement, the power control arrangement may comprise a signal receiver as the third connection interface. The signal receiver may be located inside or outside of the smart meter, for example. The power control arrangement may be formed by a single power control device, in this case the smart meter having the signal receiver, for example. The signal received from another source in this case is received by the signal receiver. The signal receiver may be connected to the grid station, in particular a power meter thereof, for example. Upon receiving the signal from the grid station, the relay may switch from a certain power limitation value, e.g., no or some margin of power export is allowed, for the household or inverter to some power export according to a certain predetermined value being allowed, for example.

As explained above, by having the relay in this first embodiment of the power management arrangement it is possible for the power management arrangement to be configured to activate or deactivate export limitations in a simple manner. The current transmitter clamp may in this case be designed as a simple constant current source. The constant current source may represent a value that is understood as no export or limited export or, in other words, a certain power export limitation value of zero or some specific current value, for example. No complex or costly intelligence is needed in the power management arrangement having this first embodiment. It may simply be a way to let the inverter of the power system always export power, except when the relay is activated to connect the current transmitter clamp and then provide the export limitations. For example, the relay may be activated only in moments of substation problems to connect to the current transmitter clamp for imposing a predetermined power limitation.

A benefit of using a smart meter as power meter in the power management arrangement is that most of them are equipped with relays as outputs which can be activated by the operator of the smart meter via dynamic tariffs or specific grid events, such as infrastructure overload. The smart meter relay is typically used to connect and disconnect loads, directly or via external contactors. In this first embodiment of the power management arrangement, the smart meter relay can be activated to switch between the current transmitter clamp and the signal receiver, in particular an external signal source received by the signal receiver from the grid station, for example. For example, it is possible that when the substation has no capacity problems, there may be no need to locally control the power of the power system via the current transmitter clamp, e.g., impose export limitations on the power system. Accordingly, the relay may be activated such that the power system via the signal receiver gets an external signal which involves no or only a certain value of power limitation for the power system. Only when required by the grid, the relay of the power meter may be connected the signal of the clamp to the inverter, so that a local export limitation is applied (for instance ensuring no export from the power system, which generally may be also referred to as a prosumer).

In a second possible embodiment of the power control arrangement, the power control arrangement comprises a controller configured for receiving a current measurement from the current transmitter clamp via the first connection interface, receiving power limitation information from the grid station and/or the grid management server via the third connection interface, and controlling the power meter and/or the inverter based on the received current measurement and the received power limitation information.

The second embodiment of the power management arrangement having the controller in the power control arrangement requires more intelligence than the first embodiment and thus is more costly than the first embodiment. However, the controller may be configured not only to activate or deactivate export limitations, but further to process different limitation values for power export and power import depending on the current state of the grid. The controller may for this purpose comprise a processing unit for making computations for processing the limitation values.

The power management arrangement may comprise the current transmitter clamp. The current transmitter clamp may be connected via a wire to the power control arrangement. Also, the power management arrangement may be one single power management device having the current transmitter clamp integrated therein or structurally attached thereto. The single power management device may also have a common housing, for example.

The controller may be configured to compute a control signal based on the received current measurement and the received power limitation information and send it to the power meter and/or the inverter for execution therewith via the second connection interface.

The power management arrangement may further comprise an analog-to-digital converter for converting an analog signal received from the current transmitter clamp via the first connection interface into a digital signal executable by the controller. This enables the controller to receive the current measurement from the current transmitter clamp as it uses an analog signal and enables the power management arrangement to make use of the current transmitter clamp instead of some other measurement device, which would be costintensive and possibly not already be provided in the households as is mostly the case with current transmitter clamps.

The power management arrangement may further comprise a digital-to-analog converter for converting a digital signal from the controller into an analog signal executable by the power meter and/or inverter. This enables the controller to communicate the control signal for execution to the power meter and/or inverter, which allows cost-effective use of already existing infrastructure in the households.

The power management arrangement may comprise as the third connection interface a powerline communication module and/or a wireless and/or wired communication module. The powerline communication module may be used to establish a powerline communication with the substation, in particular its power meter, to the grid. Alternatively, or additionally, a wireless communication module, which for example may support Narrowband loT communication, may be used for communication of the power management arrangement, in particular the controller, with the grid station. An alternative, further or the same wireless communication module and/or a wired communication module may be used for communication with the grid management server. Such alternative, further or same wireless communication modules may support a cellular communication standard, such as LTE or 5G, for example. Also, the wired communication module may support digital subscriber line for communication of the grid management server with the controller, for example.

According to a second aspect of the invention, the initially stated object is solved by a power management system, in particular for households, comprising power management arrangements according to the first aspect of the invention, current transmitter clamps individually connected via the first connection interfaces to the power management arrangements, power meters and/or inverters of power meters, in particular of households, individually connected via the second connection interfaces to the power management arrangements, and a grid station and/or a grid management server connected via the third connection interfaces to the power management arrangements.

Accordingly, individual power management arrangements may be provided in any one of several households and form together with the grid station and/or grid management server a power management system according to the second aspect of the invention. The power management system allows for individually setting export power limitations for the power systems of each one of these households.

The power meters and/or the inverters may be from at least one of a photovoltaic system, a heat pump, a charging station of an electric vehicle and/or a battery as power system. These types of power systems are particularly relevant for the application of managing power exported from households. The power management system may be configured to manage the power that these power systems are exporting into the grid.

The grid station may be a grid substation connecting a grid to multiple households. The grid station may comprise a transformer. As discussed above, the power management system may be provided for a grid station connecting multiple or several households, e.g., in the range of 10 to 1000, to the grid. The transformer may transform the power inside of the grid from a low voltage to a medium voltage.

The grid station may comprise a grid station controller. The grid station controller may be configured to compute a power limitation information of that grid station based at least on a power measured at the grid station. The controller may further be configured to send the computed power limitation information via the third connection interfaces to the power management arrangements. The power may be measured at the grid station by means of a power meter of the grid station. The power meter may be connected to the grid station controller. Other variables than power measured at the grid station, such as events like errors or failures, may also be taken as basis for computing the station limitation information by means of the grid station controller. The power limitation information may be computed as an allowance of power or power limit that may be exported by each one of the households into the grid, for example. The power limitation may be provided as or calculated or predefined by the power control arrangement as a current or power value, for example. The power limitation may be the same for every household or the grid station controller may be configured to compute individual power limitation information for each one of the households, in particular their power meters and/or inverters of their power systems. For example, it may be possible to configure the grid station controller with a database of predetermined power limitations and/or priority for each one of the households. For example, the households may be assigned with different power limitations given certain grid limitations or the households may consecutively be allowed to export power based on their priority assigned in the database. The predetermined power limitations may also be set by the grid operator and/or the household via a bidding process, for example. The bidding process may be done beforehand or live, for example. Each household may bid a certain price for power that it can export into the grid in this (live) bidding process. The grid operator or distribution company may then allow a certain power export limitation for a certain price per unit of exported power given the current overall power limitation of the grid, in particular the grid station, based on the lowest price and/or other criteria such as amount and duration of power that may be exported, for example.

The grid station controller may be configured to compute the power limitation information based on the power measured at the grid station and a predetermined power limit of the grid station. Accordingly, the grid station controller can subtract measured power from the predetermined power limit of the grid station to arrive at the power limitation information reflecting an export power limitation or, in other words, power export allowance for the households. The power limitation information in this case represents a fixed value depending only on the currently measured power at the grid station.

Also, or, alternatively, the grid management server may be configured to dynamically compute the power limit information based on current grid information. The grid management server may include a status of the electrical grid, a generation and load forecast or similar as current grid information, for example. The grid management server may be configured for observing at least a portion of the grid, in particular a greater portion of the grid than from the households to the grid station. Accordingly, the grid management server enables a management of power that is not only based locally on the portion of the grid including the households and the grid station having these households connected thereto but a greater portion of the grid, thereby enable the power management system to manage the export limitations of the households depending on more criteria than only the grid station may provide or is available to the grid station, herein referred to as the current (overall) grid information.

According to a third aspect of the invention, the initially stated object is solved by method for managing power in a power management system according to the second aspect of the invention. The method comprises the steps of receiving power limitation information from the grid station and/or the grid management server via the third connection interfaces of the power management arrangements, and controlling the power meters and/or the inverters of the power systems, in particular of the households, based on the received power limitation information.

For power management arrangements of the first embodiment described herein, the power limitation information may be received as a signal by the signal receivers of the power control arrangements. The signal may only be configured to reflect either to impose (a certain) or not to impose a power export limitation on the power systems of the households. Accordingly, the method may further comprise the step of receiving signals by the signal receivers of the power control arrangements. The method may further comprise the step of switching the relays of the smart meters of the power management arrangements based on the signal received by the signal receiver. The switching may be performed in correspondence to the power limitation information such that no export limitations or a (certain) power limitation is imposed on the power systems.

For power management arrangements of the second embodiment described herein, the method may comprise the steps of receiving current measurements from the current transmitter clamps by controllers of the power management arrangements via the first connection interfaces, receiving power limitation information from the grid station and/or the grind management server via the third connection interfaces of the power management arrangements, and individually controlling the power meters and/or the inverters of the power system, in particular of the households, based on the received current measurements and the received power limitation information.

The method may further comprise the step of reducing or increasing power output into the grid by means of the power system, which may in particular be at least one of a photovoltaic system, a heat pump, a charging station of an electric vehicle and/or a battery, according to the individual control of the power meters and/or the inverters of the power systems. Also, the method may include the step of determining or adjusting power limitation information (inter alia) based on a (live) bidding process or a database, as previously explained.

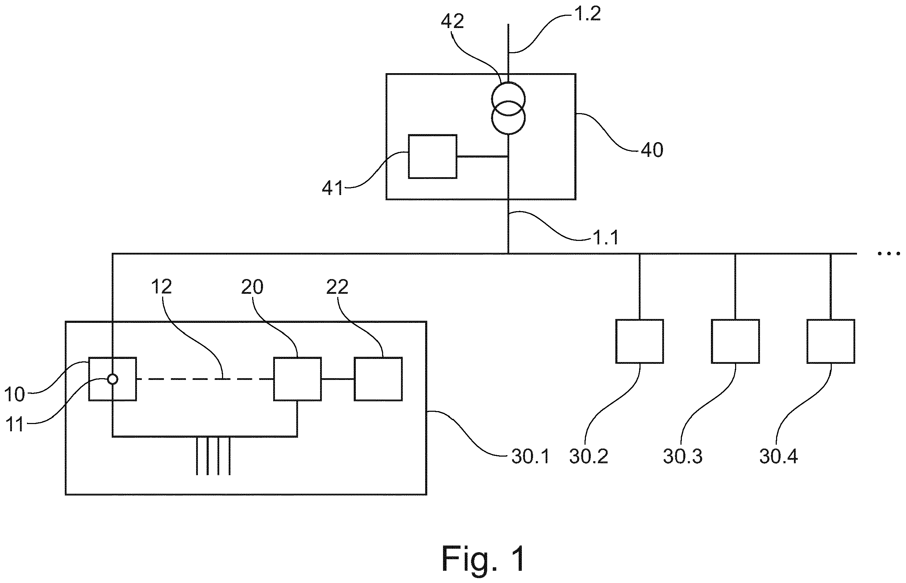

Further advantages, features and details of the invention unfold from the following description, in which by reference to drawings FIGS. 1 to 4 embodiments of the present invention are described in detail. Thereby, the features from the claims as well as the features mentioned in the description can be essential for the invention as taken alone or in an arbitrary combination. In the drawings, there is schematically shown:
- FIG. 1: a schematic representation of a grid having households and a grid station connected thereto;
- FIG. 2: a schematic representation of a first exemplary embodiment of a power management arrangement and an exemplary embodiment of a power management system according to the invention;
- FIG. 3: a further schematic representation of the power management system of FIG. 2 while in operation; and
- FIG. 4: a schematic representation of a second exemplary embodiment of a power management arrangement according to the invention.

Same objects in FIGS. 1 to 4 are denominated with the same reference number. If there is more than one object of the same kind in one of the figures, the objects are numbered in ascending order with the ascending number of the object being separated from its reference number by a dot.

FIGURE 1 shows a schematic representation of a grid 1 having several households 30.1, 30.2, 30.3, 30.4 and so on connected thereto at a low voltage. Also, a grid station 40 provided for the several households 30.1, 30.2, 30.3, 30.4 is connected to the grid 1.

The grid station 40 comprises a transformer 42 for transforming low voltage currents imported to the households 30.1, 30.2, 30.3, 30.4 via grid portion 1.1 of the grid 1 having the low voltage or for transforming low voltage currents exported from the households 30.1, 30.2, 30.3, 30.4 via grid portion 1.1 to the grid 1 into a medium voltage at grid portion 1.2 of grid 1. The grid station 40 further comprises a power meter 41 for measuring the power at the grid station 40. The grid station 40 may also be referred to as a grid substation 40 for the households 30.1, 30.2, 30.3, 30.4, the number of which may be in the range of 10 to 1000, for example.

Each one of the households 30.1, 30.2, 30.3, 30.4 may have a configuration as shown for household 30.1 in more detail. A current transmitter clamp 10 is attached at a grid connection point 10 to the grid 1. The current transmitter clamp 10 has a connection for transmitting a measured current via an analog signal to an inverter 20 of a power system 22, which may be a photovoltaic system, for example. Also, or alternatively, the analog signal may be sent to a power meter 21. The photovoltaic system can produce power and export it via the inverter 20 to the grid 1. The current transmitter clamp 10 may measure the current. A fixed limit may be set for how much power may be exported into the grid 1. Based on the current measurement from the current transmitter clamp 1, the inverter 20 or power meter 21 may calculate the current power export and observe that fixed limit to be met.

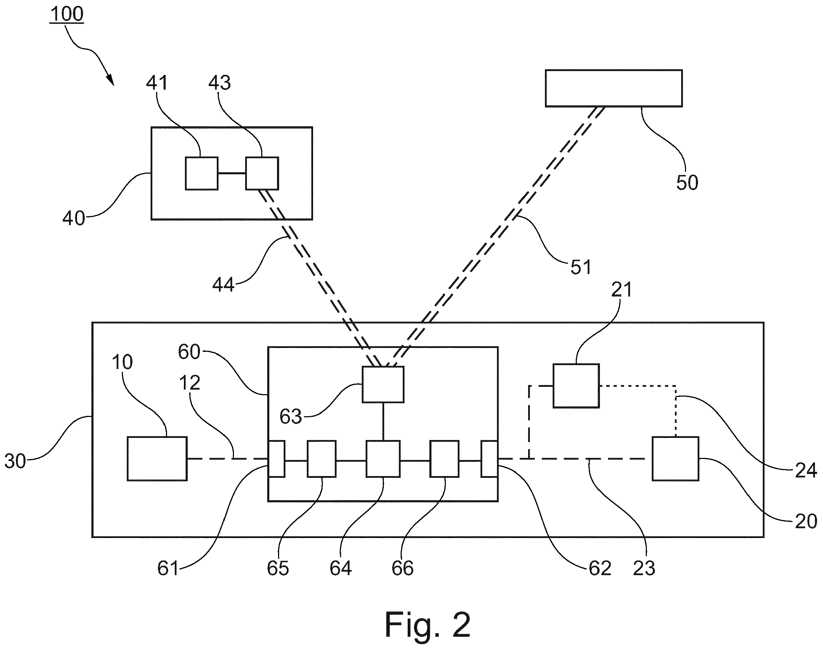

FIGURE 2 shows a schematic representation of a first embodiment of a power management arrangement 60 in a house or household 30 and an example of a power management system 100 according to the invention. The power management arrangement 60 may be the same in each one of the households 30.1, 30.2, 30.3, 30.4 and so on of FIG. 1.

The power management arrangement 60 comprises a first connection interface 61 connected via analog connection 12 to the current transmitter clamp 10 of the household 30. The power management arrangement 60 further comprises an analog-to-digital converter 65 connected to the first connection interface 61. The analog-to-digital converter 65 is configured to convert the analog signal received from the current transmitter clamp 10 into a digital signal for a controller 64 of the power management arrangement 60, which is connected to the analog-to-digital converter 65. The analog signal of the current transmitter clamp 10 contains a current measurement at or before grid connection point 11 (see FIG. 1).

The power management arrangement 60 further comprises a second connection interface 62 connected to the inverter 20 of the power system 22 (see FIG. 1) via a further analog connection 23 and/or connected to the power meter 21 of the house or household 30 via the further analog connection 23. As seen in FIG. 2, the power meter 21 and the inverter 20 may also be connected to one another via any connection such as a modbus link, for example. The controller 64 is connected via a digital-to-analog converter 66 to the second connection interface 62. The digital-to-analog converter 66 converts a digital control signal computed by the controller 64 to an analog signal forwarded by means of the second connection interface 62 and the further analog connection 23 to the inverter 20 and/or the power meter 21, which may be a so-called smart meter 21.

Moreover, the power management arrangement 60 comprises at least one third connection interface 63, which may alternatively be referred to as a gateway. The at least one third connection interface 63 connects the power management arrangement 60 to the grid station 40 and/or a grid management server 50 of a power management system 100 having the power management arrangements 60 of the households 30. The at least one third connection interface 63 may be supporting Narrowband loT or powerline communication, for example, for connecting via communication link 44 to the grid station 40 or more precisely to a grid station controller 43 or a power meter 41 of the grid station 40. The same or another third connection interface 63 may be supporting a direct subscriber line or a cellular communication standard, for example.

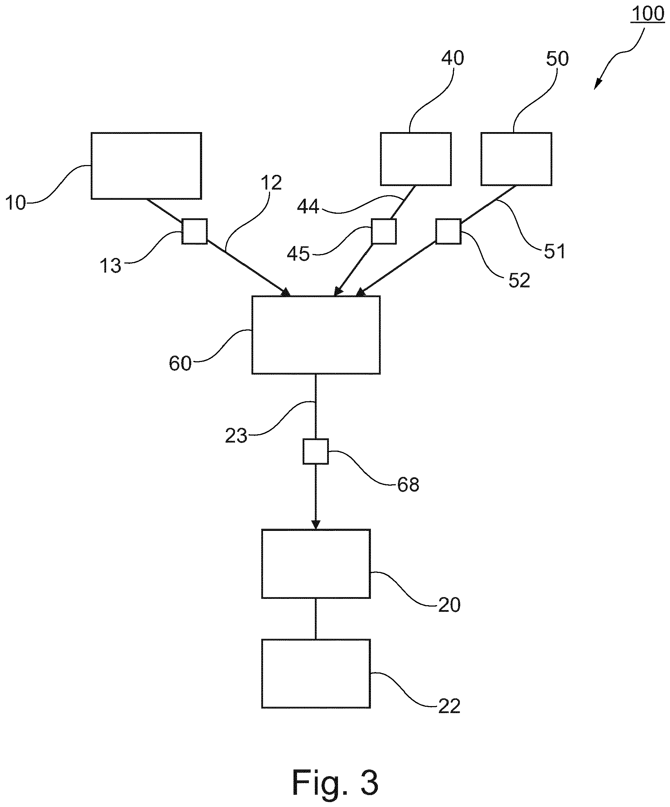

As may be taken from FIGURE 3, the controller 64 is configured to receive power limitation information 45 and/or further power limitation information 52 from the grid station 40 and/or the grid management server 50 via the at least one third connection interface 63. The controller 64 is further configured to process this power limitation information 45, 52, which may represent an export and/or import power limitation for specific or each one of the households 30, and the current measurement (signal) 13 received from the current transmitter clamp 10. For example, the controller 64 of the power management arrangement 60 can compare the current measurement 13 with the power limitation information (signal) 45, 52 and compute a control signal 68 to be forwarded to the inverter 20 of the power system 22 and/or the power meter 21 of the household 30 such that, for example, the power generated by the power system 22 and exported into the grid 1 is limited according to the current measurement 13 and the power limitation information 45, 52. For example, when the current measurement 13 is that the current is 8 A and the power limitation information from the grid station 40, in particular its grid station controller 43, indicates that the maximum current may be 12 A more, then the controller 64 may compute that the power system 22 may export a current of 12 A into the grid 1. The controller 64 accordingly may send to the inverter 20 the control signal, which may be a digital signal, converted to an analog signal, that the allowed current is 12 A for the power limitation to be met.

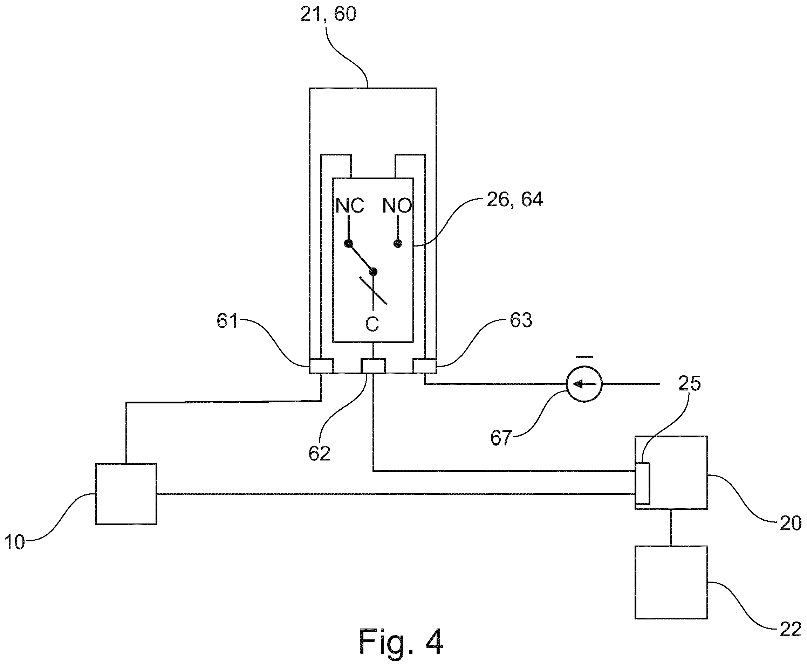

FIGURE 4 shows a schematic representation of a second embodiment of a power management arrangement 60 according to the invention.

In this second embodiment, the power management arrangement 60 may have less intelligence but use widely existing components. In particular, a smart meter 21 of the household 30 may be used for the power management arrangement 60. The power management arrangement 60 accordingly comprises the smart meter 21 having the first connection interface 61 connected to the current transmitter clamp 10, the second connection interface 62 connected to the inverter 20 of the power system 22 at a fourth connection interface 25 of the inverter 20. Also, the current transmitter clamp 10 is connected to the fourth connection interface 25 such that selectively any one of the smart meter 21 and the current transmitter clamp 10 are connected to the inverter 20 or, in other words, may send a signal to the inverter 20.

The smart meter 21 has a power control arrangement 64 in the form of a relay 64 or switch. As shown in FIG. 4, the relay 64 may be equipped with an NC/NO function. The relay 64 has two inputs and one output and consequently two possible actions. One of the inputs is connected via the first connection interface 61 to the current transmitter clamp 10. The output is connected via the second connection interface 62 to the inverter 20. The other one of the inputs is connected via a third connection interface 63 to a signal receiver 67. The signal receiver 67 may be connected to the grid station 40 and/or the grid management server 50 for receiving a signal therefrom.

Depending on whether the signal receiver 67 receives a signal, a power limit for the inverter 20, in particular the household 30 altogether, may be set or not. For example, in the relay position shown in FIG. 4, the current transmitter clamp 10 may send a signal of the current measurement to the inverter 20 received by the fourth connection interface 25. This signal may have the effect that no power may be exported into the grid 1. Then, the relay 64 is in the position as shown in FIG. 4. Now, when the signal receiver 67 receives a signal from the grid station 40, for example, that there are no power limitations or a certain power limit, because there are no technical errors or failures at the grid station 40, the relay 64 changes position and transmits the received signal to the inverter 20. The fourth connection interface 25 or input of the inverter 20 switches from the signal received from the current transmitter clamp 10 to the signal received from the signal receiver 67. In the event of a technical error at the grid station 40, the grid station 40 may stop sending the signal to the signal receiver 67. Accordingly, the default (fallback) position of the second connection interface 62 is in communication with the first connection interface 61.

### List of reference signs

- 1: grid
- 10: current transmitter clamp
- 11: grid connection point
- 12: analog connection
- 13: current measurement
- 20: inverter
- 21: power meter, smart meter
- 22: power system, photovoltaic system
- 23: further analog connection
- 24: modbus link
- 25: fourth connection interface
- 30: household, house
- 40: grid station, grid substation
- 41: power meter
- 42: transformer
- 43: grid station controller
- 44: communication link
- 45: power limitation information
- 50: grid management server
- 51: further communication link
- 52: further power limitation information
- 60: power management arrangement
- 61: first connection interface
- 62: second connection interface
- 63: third connection interface
- 64: power control arrangement, controller, relay
- 65: analog-to-digital-converter
- 66: digital-to-analog-converter
- 67: signal receiver
- 68: control signal
- 100: power management system

## Claims

1. Power management arrangement (60), in particular for a household (30), comprising
(a) a first connection interface (61) connected to or configured for being connected to a current transmitter clamp (10),
(b) a second connection interface (62) connected to or configured for being connected to a power meter (21) and/or an inverter (20) of a power system (22),
(c) a third connection interface (63) connected to or configured for being connected to a grid station (40) and/or a grid management server (50), and
(d) a power control arrangement (64), the power control arrangement (64) being configured for
(i) receiving power limitation information (45, 52) from the grid station (40) and/or the grid management server (50) via the third connection interface (63), and
(ii) controlling the power meter (21) and/or the inverter (20) based on the received power limitation information (45, 52).

2. Power management arrangement (60) according to claim 1, whereby the power management arrangement (60) in particular comprises the power meter (21) having the first connection interface (61) and the second connection interface (62), and whereby the power control arrangement (64) comprises a relay (24) of the power meter (21) connected to the second connection interface (62).

3. Power management arrangement (60) according to claim 2, whereby the power control arrangement (60) comprises a signal receiver (67) connected to or configured for being connected to the third connection interface (63).

4. Power management arrangement (60) according to claim 1, wherein the power control arrangement (60) comprises a controller (64) configured for
(i) receiving a current measurement from the current transmitter clamp (10) via the first connection interface (61),
(ii) receiving power limitation information (45, 52) from the grid station (40) and/or the grid management server (50) via the third connection interface (63), and
(iii) controlling the power meter (21) and/or the inverter (20) based on the received current measurement (13) and the received power limitation information (45, 52).

5. Power management arrangement (60) according to any of claims 1 to 4, whereby the power management arrangement (60) comprises the current transmitter clamp (10).

6. Power management arrangement (60) according to claim 4 or 5, whereby the controller (64) is configured to compute a control signal (68) based on the received current measurement (13) and the received power limitation information (45, 52) and send it to the power meter (21) and/or the inverter (20) for execution therewith via the second connection interface (62).

7. Power management arrangement (60) according to any of claims 4 to 6, whereby the power management arrangement (60) further comprises an analog-to-digital converter (65) for converting an analog signal received from the current transmitter clamp (10) via the first connection interface (61) into a digital signal executable by the controller (64).

8. Power management arrangement (60) according to any of claims 4 to 7, whereby the power management arrangement (60) further comprises a digital-to-analog converter (66) for converting a digital signal from the controller (64) into an analog signal executable by the power meter (21) and/or inverter (20).

9. Power management arrangement (60) according to any of claims 4 to 8, whereby the power management arrangement (60) comprises as the third connection interface (63) a powerline communication module and/or a wireless and/or wired communication module.

10. Power management system (100), in particular for households (30), comprising
(a) power management arrangements (60) according to any of the previous claims,
(b) current transmitter clamps (10) individually connected via the first connection interfaces (61) to the power management arrangements (60),
(c) power meters (21) and/or inverters (20) of power systems (22) individually connected via the second connection interfaces (62) to the power management arrangements (60), and
(d) a grid station (40) and/or a grid management server (50) connected via the third connection interfaces (63) to the power management arrangements (60).

11. Power management system (100) according to claim 10, whereby the power meters (21) and/or the inverters (20) are from at least one of a photovoltaic system, a heat pump, a charging station of an electric vehicle and/or a battery as power system (22).

12. Power management system (100) according to claim 10 or 11, whereby the grid station (40) is a grid substation (40) connecting a grid (1) to multiple households (30) and comprises a transformer (42).

13. Power management system (100) according to any of claims 10 to 12, whereby the grid station (40) comprises a grid station controller (43), the grid station controller (43) being configured to compute the power limitation information (45) based at least on a power measured at the grid station (40) and the grid station controller (43) further being configured to send the computed power limitation information (45) via the third connection interfaces (63) to the power management arrangements (60).

14. Power management system (100) according to claim 13, whereby the grid station controller (43) is configured to compute the power limitation information (44) based on the power measured at the grid station (40) and a predetermined power limit of the grid station (40) and/or the grid management server (50) is configured to dynamically compute the further power limit information (52) based on current grid information.

15. Method for managing power in a power management system (100) according to any of claims 10 to 14, whereby the method comprises the steps of:
(a) receiving power limitation information (45, 52) from the grid station (40) and/or the grid management server (50) via the third connection interface (63), and
(b) controlling the power meters (21) and/or the inverters (20) of the power systems (22) based on the received power limitation information (45, 52).
